Europäisches Patentamt

European Patent Office

Office européen des brevets

(19)

(11) **EP 1 723 856 A1**

(12) **EUROPEAN PATENT APPLICATION**

(43) Date of publication:
**22.11.2006 Bulletin 2006/47**

(21) Application number: **05253044.1**

(22) Date of filing: **18.05.2005**

(51) Int Cl.:
*A23L 1/317* (2006.01)     *A23L 1/315* (2006.01)
*A23L 1/308* (2006.01)     *A23L 1/305* (2006.01)
*A23K 1/18* (2006.01)

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Cargill, Inc.**
**Wayzata, MN 55391 (US)**

(72) Inventor: **The designation of the inventor has not yet been filed**

(74) Representative: **Wilkinson, Stephen John**
**Stevens, Hewlett & Perkins**
**1 St. Augustine's Place**
**Bristol BS1 4UD (GB)**

(54) **Citrus fruit fibers in processed meat**

(57)     The current invention relates to a mixture of citrus fruit fibers and soy protein, preferably soy protein flour. It further relates to its use in processed meat and the use to increase the functionality of soy protein.

EP 1 723 856 A1

**Description**

<u>Technical field</u>

The current invention relates to a composition of citrus fruit fibers and soy protein, and the use in processed meat.

<u>Background of the invention</u>

Food manufacturers are continuously challenged to find ways to present an appetizing and authentic food product at minimized raw material costs. One area of particular endeavor has been the goal of producing attractive meat-based products.

It is well known that meat-analogues can be prepared from meat by-products such as liver, lungs and other trims with binders.

WO 2004/045301 relates to a proteinaceous meat analogue which is particular useful in packaged pet foods.

Currently there is still a need for obtaining processed meat prepared from proteins, in particular from protein having inferior functionality.

The current invention provides such a product and process for preparing it.

<u>Summary of the invention</u>

The current invention relates to a dry composition comprising dried citrus fruit fiber and soy protein. The dried citrus fruit fiber is having a total dietary fiber content of from 60 to 80% wt and a water binding capacity of from 7 to 12 (w/w). Furthermore the citrus fruit fiber is obtainable from citrus fruit selected from the group consisting of oranges, tangerines, limes, lemons and grapefruit.

The current invention further relates to a dry composition wherein the soy protein is selected from soy protein flour, soy protein concentrate, soy protein isolate, preferably soy protein flour.

The dry weight ratio of the dried citrus fruit fiber to protein is from 1:99 to 99:1, preferably from 5:95 to 90:10, more preferably from 10:90 to 30:70.

Said dry composition further comprises hydrocolloids.

The current invention relates to a liquid composition comprising the dry composition of the current invention and an edible liquid. The edible liquid is water, water-based liquid, water-miscible liquids and/or mixtures thereof.

Furthermore the current invention relates to a meat emulsion comprising dry composition according to current invention, fat and water in a weight ratio up to 1:7:7, preferably from 1:4:4 to 1:7:7, more preferably 1:5:5 of dry composition: fat: water.

The current invention relates to the use of dried citrus fruit fiber to increase functionality of soy protein, preferably the functionality of soy protein flour is increased. Finally said functionality is increased in processed meat.

The current invention relates to processed meat comprising edible ingredients and a composition or a meat emulsion according to the current invention.

Furthermore it relates to a process for preparing processed meat and said process comprises the following steps:

    a) adding to meat the dry composition according to current invention to water, or taking liquid composition of current invention,
    b) adding fat,
    c) optionally adding salt,
    d) optionally adding further edible ingredients,
    e) mixing,
    f) optionally casing the processed meat.

<u>Detailed description</u>

The current invention relates to a dry composition comprising dried citrus fruit fiber and soy protein. Citrus fiber is a valuable component which has relatively high total dietary fiber content and a balanced ratio of soluble to insoluble dietary fiber. The balanced dietary fiber spectrum insoluble (structural) and soluble (chiefly pectin) fiber is advantageous in physiological functionality over cereal-based fibers. Citrus fiber, particularly orange fiber, has an extremely high water binding capacity, resulting in high viscosities compared to other citrus fibers such as Vitacel™ orange fiber (available from Rettenmaier). In one preferred embodiment, dried citrus fiber has a total dietary content of from about 60 to about 80-wt% (based on dry substance) and a water binding capacity from about 12 (w/w). Preferably the total dietary fiber content is at least about 70-wt% and the water binding capacity is at least about 8 (w/w).

The citrus fiber is extracted from citrus vesicles from a wide variety of citrus fruits, non-limiting examples of which include oranges, tangerines, limes, lemons and grapefruit.

Citrus vesicles refer to the cellulosic material contained in the inner, juice-containing portion of citrus fruit. Citrus vesicles are sometimes also referred to as coarse pulp, floaters, citrus cells, floating pulp or pulp.

Citrus fiber, as compared to citrus flour obtained from citrus peel, is lighter in color, is relatively free of taste and odor.

In contrast, citrus flour obtained from citrus peel is characterized by an orange peel taste and odor, and a dark orange color, which is severely limiting the product's uses. Additional advantages of citrus fiber include a higher total dietary fiber content (e.g., about 72% versus 58%); lower carbohydrate content (e.g., about 5% versus 15%); and higher water binding (e.g., about 8.5 grams of water per gram of fiber versus 5.5 g/g).

The ratio soluble to insoluble dietary fiber is an important factor in the citrus fiber's functionality. Other important considerations include the degree of milling (granulometry) and drying conditions (process of drying). Generally, a higher degree of milling (i.e., a finer fiber granulometry) results in more smoothness of the fiber in the solution, as well as reduced water absorption capacity and reduced oil binding capacity. Preferably dried citrus fruit fiber is obtainable according to the process disclosed in a pending US patent application from Cargill Inc.

The current invention relates to a dry composition wherein the soy protein is selected from soy protein flour, soy protein concentrate, soy protein isolate, preferably soy protein flour. Soy protein flour and grits are made by grinding and screening soybean flakes either before or after removal of the oil. Their protein content is in the range of 40 to 54%. Soy flours and grits are the least refined forms of soy protein products used for human consumption and may vary in fat content, particle size, and degree of heat treatment. They are also produced in lecithinated or defatted forms. The degree of heat treatment creates varying levels of water dispersibility and enzyme activity qualities that can be useful in tailoring functionality in many food applications.

Soy protein concentrates are prepared from dehulled and defatted soybeans by removing most of the water-soluble, non-protein constituents. They contain at least 65% protein (N x 6.25) on a moisture-free basis (mfb). Soy protein concentrates are produced by three basic processes, i.e. acid leaching (at ~pH 4.5), extracting with aqueous alcohol (60-90%), and denaturing the protein with moist heat before extraction with water. Low water-soluble (aqueous alcohol extraction) soy protein concentrate is subjected to heat (steam injection or jet cooking) and mechanical working (homogenization) to increase solubility and functionality.

Neutralized concentrates prepared by acid leaching have a higher water-soluble protein content than those prepared by either alcohol leaching or heat denaturation techniques. Low water-soluble soy protein concentrate (aqueous alcohol extraction) known as traditional concentrate, when heat treated by steam injection or jet cooking, will have increased solubility and functionality. Solubility and functionality are further increased with mechanical working as in a homogenizer. These concentrates are known as functional concentrates.

Soy protein isolates are the most highly refined soy protein products commercially available. They represent the major protein fraction of the soybean. Soy isolates are prepared from dehulled and defatted soybeans by removing most of the non-protein components. They contain > 90% protein (N -6.25) on a moisture-free basis.

Isolates may also be lecithinated to improve dispersibility and to reduce dusting. Both gelling and non-gelling varieties are available, as well as varying grades of viscosity.

Soy protein flour has limited functionality such as emulsifying and water-binding properties. However blending the soy protein flour with dried citrus fruit fiber, in particular the dried citrus fruit fiber obtainable according to the process from Cargill Inc, improves its functionality in terms of avoiding fat and/or jelly separation.

Said dry composition further comprises hydrocolloids. Examples of hydrocolloids include carrageenan, xanthan, guar, locust bean, alginates, carboxymethylcellulose, carob bean gum, starch derivatives (native and/or modified starches, maltodextrins, and the like), where present, the amount of hydrocolloids is up to 30% w/w on the dry composition. Conventionally, starch hydrolysates with DE up to 20 are termed maltodextrins.

The current invention further discloses liquid composition comprising the dry compositions of the current invention and an edible liquid. The edible liquid can be selected from water, water-based liquids such as milk, water-miscible liquids such as lower alcohols like ethanol and/or mixtures thereof.

Furthermore the current invention relates to a meat emulsion comprising dry composition according to current invention, fat and water in a weight ratio up to 1:7:7, preferably from 1:4:4 to 1:7:7, more preferably 1:5:5 dry composition: fat: water.

All the weight ratios up to 1:7:7 (dry composition: fat: water) wherein the dry composition preferably is comprising soy protein flour, are resulting in suitable meat emulsions. Weight ratios such as 1:1:1, 1:2:2, 1:3:3, 1:4:4, 1:5:5, 1:6:6 and 1:7:7 of dry composition: fat: water are all part of the current invention.

Meat emulsion systems are often used in the meat industry to predict performance of proteins or other functional ingredients in processed meats such as sausages, pâté and the like.

The meat emulsions are prepared as follows: after adding the dry composition of the current invention to the water, the suspension is chopped until smooth and shiny appearance in e.g. a bowl cutter.

After adding the fat, the complete mixture is emulsified and optionally some salt is added followed by increasing the temperature.

These model emulsions are evaluates for fat/jelly separation (visual) and hardness (Texture analysis by TPA penetration with small ebonite plunger of 314 mm$^2$ area for 20 mm penetration distance into the emulsified product. Test temperature is refrigerator temperature). Ideally, the pasteurized or sterilized model emulsion product should show no jelly and/or fat separation, and as high firmness as possible.

The dried citrus fruit fiber is used to increase the soy protein functionality in particular soy protein flour and finally said functionality is particularly increased in processed meat.

The current invention relates to processed meat comprising edible ingredients and a composition or a meat emulsion according to the current invention.

Processed meat is including for example emulsified cooked meat products and grounded meat products. It may include half-processed meat, ham, bacon, sausage, corned beef, dried meat, meat dumpling, hamburger, meatballs, raw shao-mai, daily household dishes and the like.

Ham further includes roasted meat, preserved chicken and fresh ham. The sausage can be smoked or dried. Further subdivision of hamburger and/or meatballs can be made according to the content of meat, being more or less than 50% of meat content. The food items referred to as daily household dishes, regardless of actual meat content, include pork cutlets, Japanese soup broth, shao-mai, croquette and wontons.

Edible ingredients of processed meat are meat-based products, and additives.

Typical additives for processed meat are nitrite-salts, phosphates, pepper, macis, gember, Cardemom, ascorbic acid, mono sodium glutamate and the like.

The current invention has demonstrated that by applying the composition of the current invention in processed meat the fat and the jelly separation are significantly reduced (and or none existing) and the firmness is increased. By applying the composition of the current invention in the preparation of hamburger there is no shrinking observed and the yield is the same. Furthermore the dry composition has a high water-holding capacity even with a low content of meat. Sausage comprising the composition of the current invention can be cased in permeable or impermeable casings.

The composition of the current invention is suitable for the use in processed meat.

Furthermore it relates to a process for preparing processed meat and said process comprises the following steps:

    a) adding to meat the dry composition according to current invention to water, or taking liquid composition of current invention,
    b) adding fat,
    c) optionally adding salt,
    d) optionally adding further edible ingredients,
    e) mixing,
    f) optionally casing the processed meat.

The current invention demonstrates the following advantages:

- Compositions of citrus fruit fiber and soy protein can be prepared in any ratio.
- The citrus fruit fiber improves the functionality of soy protein, in particular of soy protein flour.
- Protein of lower quality, such as soy protein flour can be used in processed meat and no jelly/fat separation is observed and meat products of good quality are obtained.
- The dry composition of the current invention can be used in any weight ratio with fat and water to study the jelly fat separation in meat emulsions.

The current invention is further illustrated by way of the following example.


Example 1


Meat emulsion


1/4/4 emulsions were based on 1 part dry composition/ 4 parts of fat and 4 parts of water. 1/5/5 emulsions were based upon 1 part dry composition/ 5 parts of fat and 5 parts of water. The following compositions of the current invention were used as dry composition in the emulsion:

    10% coarse orange fiber (+ 90% defatted soy flour (10 mesh -80 PDI from Cargill)
    20% coarse orange fiber (+ 80% defatted soy flour (10 mesh -80 PDI from Cargill)
    30% coarse orange fiber (+ 70% defatted soy flour (10 mesh -80 PDI from Cargill)

Coarse orange fibre granulometry: average particle size of 500 microns as measured with Sympatec Laser PSD Instrument.

PDI = protein dispersibility index

The emulsion was formed as follows:

350 grams of dry composition was added onto a water/ice cubes blend (700 grams water/ 700 grams of ice) and mixed for 3 minutes at speed 1 (slow speed) in a Stephan electronic 2010 UM01 lab cutter. Back fat (1400 grams) was added and cuttered for 2 minutes at speed 2. Salt (47.25 gram) was added and the cutter procedure at speed 2 was continued until 17°C was reached. 5 cans were filled with the model emulsion product.

Cutter procedure was then further continued until 24°C and again 5 cans were filled.

All can were closed.

A part of the cans was then pasteurized in water bath at 80°C until core temperature of 72°C was reached.

Another part of the cans was sterilized for 20 minutes at 121°C in a lab sterilizer unit.

After the respective heat treatments, the cans were cooled down as fast as possible into cold ice water and stored at 4°C.

The obtained results are displayed in Table 1.

Table 1

| Dry composition | Emulsion type | Jelly separation | Hardness TAXT2 Plus (grams) |
|---|---|---|---|
| SF 200-70 90% OPF 10% | **1P 4W 4F (past.)** | None | 457 |
| SF 200-70 80% OPF 20% | **1P 4W 4F (past.)** | None | 714 |
| SF 200-70 70% OPF 30% | **1P 5W 5F** | None | 367 |
| SF 200-70 80% OPF 15% 5% Carrageenan K200 | **1P 5W 5F** | None | 1150 |
| SF 200 -70 = defatted Soy flour (Cargill) (200 mesh - 70 PDI (protein dispersibility index) OPF= orange fiber (Cargill) SF 200-70 90% OPF 10% = 90% (w/w) of defatted soy flour 200 mesh - 70 PDI) and 10% (w/w) orange fiber (Cargill) 1P 4W 4F= 1 part dry composition / 4 parts water / 4 parts fat 1P 5W 5F= 1 part dry composition / 5 parts water / 5 parts fat | | | |

The jelly separation was based upon visual observation.

The hardness was measured with Texture analyzer (Texture analysis by TPA penetration with small ebonite plunger of 314 $mm^2$ area for 20 mm penetration distance and at penetration test speed of lmm/second into the emulsified product. Test temperature is refrigerator temperature).

Fat and jelly separations were reduced and firmness of the resulting 1/4/4 meat emulsion system was increased.

Example 2

Beefburger

The following recipes were applied:

| Beefburger | Reference | T4 | T7 |
|---|---|---|---|
| Beef | 98.50% | 80% | 70% |
| Spices | 1.50% | 1.50% | 1.50% |
| Prosanté hydrated (texturised defatted soy protein flour (Cargill) | | 10% | 15% |
| Coarse OPF Fiber (Cargill) (granulometry: average particle size 500 microns) | | 0.76% | |
| Fine OPF Fiber (Cargill) (granulometry: average particle size 100 microns) | | | 1.21% |
| Water | | 7.74% | 12.29% |
| | 100.00% | 100% | 100% |
| | | | |

The beefburgers were prepared as follows:

Grinded beef meat, soy protein flour and orange fiber were blended with water in Hobart mixer Type N50CE at speed 1 and after 30" spices were added.

After 2.5 min. the mass was turned manually; the mass was further blended for total time of 5 mins.

The blend was put in refrigerator for 2 hours.

The burgers of 90 grams were formed using a cylindrical burger former device KD1 with inner diameter of 83 mm. After forming, the burgers were then fried fresh until 74-75°C core temperature.

The quality of the products was determined by the following parameters:

- Measurements of dimensions before and after frying: shrinkage
- Measurement of cooking loss (weight before and after frying)
- Taste, texture and juiciness, aspect and color

$$\text{Yield} = 100\% - \left\{ \frac{(\text{weight start} - \text{weight after baking})}{(\text{weight start})} \right\} * 100$$

weight start = weight of burger before baking

Shrink = diameter before baking minus diameter after baking.

The following observations were made:

| Beefburger | Reference | T4 | T7 |
|---|---|---|---|
| Before Baking | | | |
| Diameter (mm) | 80 | 80 | 80 |
| Height (mm) | 20 | 20 | 20 |
| After Baking | | | |
| Diameter (mm) | 65 | 65 | 65 |
| Height (mm) | 20 | 20 | 17 |
| Shrink (mm) | 15 | 15 | 15 |
| Yield % | 83 | 81 | 83 |

| | | | |
|---|---|---|---|
| Beef % | 98.5 | 80 | 70 |
| water % | 0 | 15 | 23 |

There is no difference in shrink between the reference and the products of the current invention. Also the yield is the same between the reference and the products of the current invention.

Example 3

Sausage

| Sausage | Reference | T4 |
|---|---|---|
| Pork Meat SI (20% fat) | 40% | 27% |
| Pork fat (55% fat) | 30% | 31% |
| Backfat (90% fat) | 10% | 0% |
| Ice | 20% | 38% |

(continued)

| Sausage | Reference | T4 |
|---|---|---|
| Fine OPF Fibre Cargill) | | 1.20% |
| Soy flour 70 PDI (Cargill) | | 2.80% |
| | 100% | 100% |

- Pork meat SI = (20%fat - 17% protein - 63% water)
- Pork fat = (55%fat - 10% protein - 35% water)
- Back fat = (90%fat - 2% protein - 8% water)

Fine OPF Fiber (Cargill) (granulometry: average particle size 100 microns

On 10 kg meat basis the following additives were added:

- 200 grams Nitrite salt
- 30 grams Phosphate
- 37 grams Spice blend
- 10 gram MSG (mono sodium glutamate)
- 10 gram ascorbic acid

The sausages were prepared as follows:

First Cutter (slow speed):

- Add pork meat
- Add salt and phosphate
- 1/3 of ice and spices

- the total was cuttered to 6 °C followed by cuttering at high speed.

- Add orange fiber and soy protein flour + 1/3 ice

- Add back fat and cutter to 12°C

- Add 1/3 of ice + ascorbic acid

- Cutter to 14°C

The end-products were stuffed into casings using Stephan continuous vacuum filler

- 3 sausages into sterile, non-permeable casing (diameter 6 cm)
- 3 sausages into permeable natural sheep casing (diameter 6 cm)

The cased meat was cooked in water at 75-80°C until core temperature sausage of was 72°C
Finally after cooking the sausages were cooled in ice water.
The products were analyzed visually for color and fat/jelly separation and further by Texture Analysis (TAXT2 Plus):

- Cutting test (blade knife test)

A cutting blade (10 cm long sharp cutting edge width 7 cm) was mounted on the moving upper part of the texture analyzer.
A 28 mm thick slice of sausage (diameter 6 cm) was cut with the cutting blade and the maximum cutting force (grams) was recorded.
Finally the cooking loss (only on sausages stuffed into permeable casings) was determined by weighting the sausage before and after the cooking process. For yield, the same formula as shown in the beef burger example was used.

| After cooking Permeable casings | Reference | T4 |
|---|---|---|
| Fat Jelly separation | none | none |
| Hardness (cutting test TAXT2) | 2200 | 1800 |
| Yield % | 94 | 95 |
| After cooking Non-Permeable casings | | |
| Fat Jelly separation | none | none |
| Hardness (cutting test TAXT2) | 1980 | 1725 |
| | | |
| Taste/mouthfeel | Std | Std |

**Claims**

1. A dry composition comprising dried citrus fruit fiber and soy protein.

2. A dry composition according to claim 1 **characterized in that** the dried citrus fruit fiber is having a total dietary fiber content of from 60 to 80% wt and a water binding capacity of from 7 to 12 (w/w).

3. A dry composition according to claim 1 or 2 **characterized in that** the citrus fruit fiber is obtainable from citrus fruit selected from the group consisting of oranges, tangerines, limes, lemons, and grapefruit.

4. A dry composition according to any one of claims 1 to 3 **characterized in that** the soy protein is selected from soy protein flour, soy protein concentrate, soy protein isolate, preferably soy protein flour.

5. A dry composition according to any one of claims 1 to 4 **characterized in that** the weight ratio of dried citrus fruit fiber to protein is from 1:99 to 99:1, preferably from 5:95 to 90:10, more preferably from 10:90 to 30:70.

6. A dry composition according to any one of claims 1 to 5 **characterized in that** the composition further comprises hydrocolloids.

7. A liquid composition comprising a dry composition according to claim 1 to 6 and an edible liquid.

8. A liquid composition according to claim 7 **characterized in that** the edible liquid is water, water-based liquids, water miscible liquids and/or mixtures thereof.

9. A meat emulsion comprising dry composition according to any one of claim 1 to 6, fat and water in a weight ratio up to 1:7:7, preferably from 1:4:4 to 1:7:7, more preferably 1:5:5 dry composition: fat: water.

10. Use of dried citrus fruit fiber to increase functionality of soy protein.

11. Use according to claim 10 **characterized in that** functionality of soy protein flour is increased.

12. Use according to claim 10 or 11 **characterized in that** said functionality is increased in processed meat.

13. Processed meat comprising edible ingredients and a composition according to anyone of claim 1 to 6 or a composition according to claim 7 or 8, or a meat emulsion according to claim 9.

14. A process for preparing processed meat and said process comprises the following steps:

   a) adding to meat the dry composition according to anyone of claim 1 to 6 to water, or taking liquid composition of claim 7 or 8,
b) adding fat,
c) optionally adding salt,
d) optionally adding further edible ingredients,
e) mixing,
f) optionally casing the processed meat.

**European Patent Office**

**EUROPEAN SEARCH REPORT**

Application Number

EP 05 25 3044

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 039 952 A (SUNVOLD ET AL) 21 March 2000 (2000-03-21) * column 4, line 45 - column 5, line 39; claims * | 1-9,13, 14 | A23L1/317 A23L1/315 A23L1/308 A23L1/305 A23K1/18 |
| D,Y | WO 2004/045301 A (MARS INCORPORATED; GIFFARD, CATRIONA) 3 June 2004 (2004-06-03) * the whole document * | 1-14 | |
| Y | US 4 225 628 A (LYNN ET AL) 30 September 1980 (1980-09-30) * claims * | 1-14 | |
| A | US 2001/033856 A1 (ZOHOUNGBOGBO MATHIAS CHRISTIAN) 25 October 2001 (2001-10-25) * claims 26-28 * | 1-14 | |
| A | EP 1 527 701 A (KRAFT FOODS HOLDINGS, INC) 4 May 2005 (2005-05-04) * claims * | 1-14 | |

**TECHNICAL FIELDS SEARCHED (Int.Cl.7)**

A23L
A23K

The present search report has been drawn up for all claims

| Place of search | Date of completion of the search | Examiner |
|---|---|---|
| Munich | 21 September 2005 | Vernier, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 25 3044

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2005

| Patent document cited in search report | | Publication date | Patent family member(s) | | Publication date |
|---|---|---|---|---|---|
| US 6039952 | A | 21-03-2000 | US | 6306442 B1 | 23-10-2001 |
| WO 2004045301 | A | 03-06-2004 | EP | 1565068 A1 | 24-08-2005 |
| US 4225628 | A | 30-09-1980 | NONE | | |
| US 2001033856 | A1 | 25-10-2001 | NONE | | |
| EP 1527701 | A | 04-05-2005 | AU | 2004224943 A1 | 19-05-2005 |
| | | | BR | 0406037 A | 23-08-2005 |
| | | | CA | 2485557 A1 | 29-04-2005 |
| | | | JP | 2005130856 A | 26-05-2005 |

EPO FORM P0459

For more details about this annex : see Official Journal of the European Patent Office, No. 12/82

**EP 1 723 856 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004045301 A